# EUROPÄISCHE PATENTSCHRIFT

(11) **EP 0 735 655 B1**
(45) Veröffentlichungstag und Bekanntmachung des Hinweises auf die Patenterteilung: **11.09.2002**
(21) Anmeldenummer: 96103949.2
(22) Anmeldetag: 13.03.1996
(51) Int. Cl.: H02K 49/00

(54) **Magnetkupplung**
Magnetic clutch
Accouplement à aimant

(30) Priorität: 28.03.1995 DE 29505250 U
(43) Veröffentlichungstag der Anmeldung: 02.10.1996
(73) Patentinhaber: Burgmann Dichtungswerke GmbH & Co. KG, 82515 Wolfratshausen (DE)
(72) Erfinder: Scherer, Hans-Georg, Dipl.-Ing., 82538 Geretsried (DE)
(74) Vertreter: Schmidt, Horst, Dr.

(56) Entgegenhaltungen:
- WO-A-92/15144
- DE-A- 3 639 719
- DE-U- 29 500 108
- US-A- 3 989 966

## Beschreibung

Die Erfindung betrifft eine Magnetkupplung gemäss Oberbegriff des Patentanspruches 1.

Die Erfindung bezieht sich insbesondere auf Magnetkupplungen zum Einsatz für Pumpen, Rührwerke oder dgl. bei tiefen Temperaturen, d.h. Anwendungen, bei denen ein Einfrieren der Magnetkupplung zu befürchten ist. Bei derartigen Anwendungen muss für eine Beheizung der Magnetkupplung gesorgt werden, anderenfalls eine Drehmomentenübertragung nicht oder nur mit erheblichen Verlusten erfolgen kann.

Eine schon vorgeschlagene indirekte Beheizung über das Pumpengehäuse oder mittels eines in einem doppelwandig ausgebildeten Spalttopf eingeführten Temperierfluides ist entweder nicht ausreichend wirksam, da damit nicht alle Bereiche der Magnetkupplung, an denen Relativdrehungen der Bauteile auftreten, erfasst werden können, oder zu bauaufwendig und störanfällig. Doppelwandige Spalttöpfe bedeuten ausserdem eine aufgrund der vergrösserten Wandstärke des Spalttopfes vergrösserte radiale Abmessung des Magnetspaltes, was mit entspechenden Verlusten in der Drehmomentenübertragungskapazität der zusammenwirkenden Magnetanordnungen der Magnetkupplung verbunden ist. Eine bekannte Magnetkupplung (DE-A-3639719) mit Zuführung des Temperierfluides über einen doppelwandigen Spalttopf sieht zusätzlich eine so steife Ausbildung des Spalttopfes vor, dass dieser Träger eines stationären vom Temperierfluid ebenfalls beaufschlagten Teiles eines der beiden beabstandeten Gleitlager sein kann, mit denen die Abtriebswelle der Magnetkupplung gehalten ist. Diese Konstruktion verlangt nicht nur eine spezielle Ausbildung der Wellenlagerung, die trotz ihrer Komplexität nur für einen Einsatz mit geringen Anforderungen an die Lagerung in Frage kommt, sondern ermöglicht auch nur die Temperierung eines der beiden Gleitlager, so dass für das andere Gleitlager besondere Massnahmen zur Verhinderung eines "Festfrierens" getroffen werden müssen. Die Praxis hat ferner gezeigt, dass die bekannten Massnahmen häufig mit ausserordentlich langen Aufheizzeiten und hoher unerwünschter Wärmeabstrahlung an die Aussenumgebung und damit mit hohen Energieverlusten verbunden sind.

Der Erfindung liegt die Aufgabe zugrunde, eine wirksame Temperierung einer Magnetkupplung der eingangs erwähnten Gattung zu ermöglichen, die geeignet ist, bei geringem baulichen Aufwand alle wesentlichen Bereiche der Magnetkupplung, an denen Relativdrehungen auftreten, zu erfassen.

Bezüglich der Lösung dieser Aufgabe wird auf den kennzeichnenden Teil des Patentanspruches 1 verwiesen. Die Erfindung sieht demzufolge das Vorsehen einer Strömungspassage für ein Temperierfluid in einer stationären Gehäuseanordnung vor, die beide Gleitlager aussen umfasst und in wärmeübertragender Beziehung zum abtriebsseitigen Kupplungselement steht, um dieses auf eine geeignete Temperatur zu bringen. Die Strömungspassage kann mit minimalem baulichen Aufwand in Gestalt einer Kammer im Lagergehäuse der Gleitlageranordnung realisiert werden. Die Beheizung erfolgt gezielt ohne wesentliche verlustreiche Wärmeabstrahlung an die Aussenumgebung, so dass die Aufheizzeiten und/oder der Energieverbrauch geringer als bei den bekannten Beheizungsmassnahmen sind. Die Erfindung ermöglicht insbesondere auch eine wirksame Temperierung beider Gleitlager, ohne dass es dazu einer besonderen Ausbildung des Spalttopfes bedarf. Dieser kann vielmehr die übliche und bevorzugte einwandige Ausbildung haben.

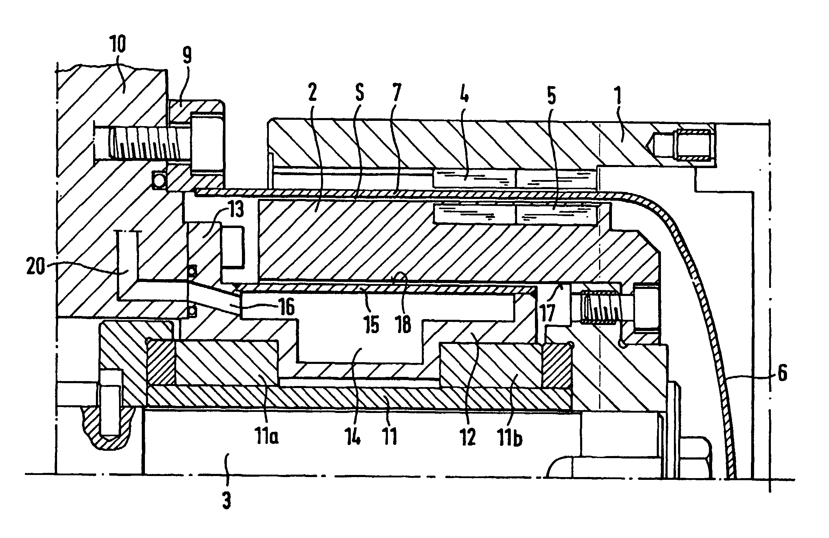

Die Erfindung wird nachfolgend anhand einer Ausführungsform und der Zeichnung näher erläutert. Die Zeichnung zeigt eine erfindungsgemäss aufgebaute Magnetkupplung in längsgeschnittener Ansicht.

Die Magnetkupplung umfasst, wie dargestellt, ein antriebsseitiges Kupplungselement 1 und ein abtriebsseitiges Kupplungselement 2, jeweils in Gestalt von rohr- oder büchsenförmigen Elementen, die konzentrisch in radialem Abstand voneinander angeordnet und Träger von an- bzw. abtriebsseitigen Magnetanordnungen 4 bzw. 5 sind. Jede Magnetanordnung 4, 5 umfasst eine Vielzahl umfänglich verteilter Permanentmagnete, die zu den jeweiligen gegenüberliegenden Permanentmagneten so ausgerichtet sind, dass ein auf das antriebsseitige Kupplungselement 1 einwirkendes Drehmoment über die Magnetanordnungen 4, 5 auf das abtriebsseitige Kupplungselement 2 übertragen wird. Das antriebsseitige Kupplungselement 1 kann mit einem Antriebsmotor (nicht gezeigt) verbunden sein.

Ein Spalttopf 6 zur hermetischen Abdichtung eines produktseitigen, das abtriebsseitige Kupplungselement 2 enthaltenden Bereiches der Magnetkupplung gegenüber der Aussenumgebung umfasst einen zylindrischen Abschnitt 7, der den Spalt S zwischen den Magnetanordnungen 4, 5 durchsetzt und, wie bei 9 angedeutet ist, fest mit dem Gehäuse 10 einer Pumpe oder dgl. verbunden ist.

Das abtriebsseitige Kupplungselement 2 ist ferner fest an einer Welle 3 montiert, auf der ein nicht gezeigtes anzutreibendes Element, z.B. ein Pumpenlaufrad, Rührwerk oder dgl., befestigt sein kann. Die Welle ist mittels einer Gleitlageranordnung, die das allgemeine Bezugszeichen 11 trägt, konzentrisch zu den Kupplungselementen 1, 2 am Gehäuse 10 abgestützt.

Die Gleitlageranordnung 11 umfasst ein Paar axial beabstandete Gleitlager 11a, 11b, deren stationäre Lagerteile in einem ringförmigen Lagergehäuse 12 gehalten sind, das, wie bei 13 angedeutet ist, am Vorrichtungsgehäuse 10 befestigt ist. Das Lagergehäuse 12 hat eine aussenseitig konkave Querschnittskonfiguration, die in Verbindung mit einer äusseren rohrförmigen Abdeckung oder Abschlusswand 15 eine ringförmige gegenüber der Umgebung abgedichtete Kammer 14 definiert, durch die über im Lagergehäuse 12 ausgebildete in die Kammer 14 einmündende Zu- und Abführpassagen 16 ein Temperierfluid zirkuliert werden kann. Die Zu- und Abführpassagen 16 stehen mit externen Zu- und Abführleitungen 20 für das Fluid in Verbindung, die z.B. im oder am Vorrichtungsgehäuse 10 verlegt sein können.

Das Lagergehäuse 12 hat vorzugsweise eine Querschnittskonfiguration, wie sie in der DE-U-295 00 108.9 beschrieben ist und sich dadurch auszeichnet, dass ein zwischenliegender Bereich des Lagergehäuses 12 zwischen den Gleitlagern 11a, 11b nicht als starrer kompakter Körper, sondern als flexibles Wandelement ausgebildet ist, so dass das Lagergehäuse 12 eine gegenseitige zentrierende Relativbewegung der Gleitlager 11a, 11b ermöglicht. In Folge dieser Konfiguration des Lagergehäuses 12 hat die ringförmige Strömungskammer 14 einen zwischenliegenden Bereich mit einer grösseren Fluidaufnahmekapazität als die seitlichen an die Gleitlager 11a, 11b angrenzenden Bereiche, indem der zwischenliegenden Bereich eine grössere radiale Abmessung als die seitlichen Bereiche aufweist. Im übrigen kann bezüglich weiterer Details auf die vorgenannte Druckschrift verwiesen werden. Es versteht sich, dass die Erfindung auf eine derartige Konfiguration des Lagergehäuses 12 nicht beschränkt ist, sondern auch andere geeignete Konfigurationen vorgesehen werden können, um ein Temperierfluid, gegenüber der Aussenumgebung des Lagergehäuses 12 hermetisch abgedichtet, zirkulieren zu lassen.

Die Zu- bzw. Abführleitungen 20 stehen mit einer externen nicht gezeigten Einrichtung zur Temperierung des Fluides in Verbindung. Die Einrichtung kann zum Heizen oder Kühlen des Temperierfluides oder sowohl zum Heizen als auch Temperieren ausgelegt sein.

Das Lagergehäuse 12 ist im wesentlichen gänzlich innerhalb des abtriebsseitigen Kupplungselementes 2 aufgenommen, wobei die rohrförmige, die Kammer 14 des Lagergehäuses 12 aussen begrenzende kontinuierliche Abschlusswand 15 in radial beabstandeter, konzentrischer, enger Beziehung zur inneren Umfangsfläche 17 des abtriebsseitigen Kupplungselementes 2 steht, so dass zwischen der äusseren Umfängsfläche 18 der Abschlusswand 15 und der inneren Umfängsfläche 17 des Kupplungselementes 2 ein enger Spalt verbleibt.

Das durch die Kammer 14 zirkulierte Temperierfluid bewirkt nicht nur eine Temperierung der Gleitlager 11a, 11b, sondern auch eine Erwärmung des abtriebsseitigen Kupplungselementes 2, indem die von der Abschlusswand 15 nach aussen abgestrahlte Wärme äusserst wirksam auf das abtriebsseitige Kupplungselement 2 und von dort auf den Spalt S zwischen dem Spalttopf 6 und der abtriebsseitigen Magnetanordnung 5 übertragen wird, um in diesen Bereichen ebenfalls eine geeignete Temperatur zu schaffen bzw. aufrechtzuerhalten.

Eine kontinuierliche oder vorübergehende Erwärmung ist z.B. bei Magnetkupplungen für den Antrieb von Kreiselpumpen oder Rührwerken zur Förderung oder Behandlung von Medien bei tiefen Temperaturen erforderlich, um das in den Spalten der Magnetkupplung eingedrungene Medium hinsichtlich der Viskosität auf einen Zustand zu bringen oder zu halten, dass eine möglichst verlustfreie Drehung der beweglichen Teile der Magnetkupplung erfolgen kann. Bei Start der Pumpe kann auf diese Weise auch ein Einfrieren der Magnetkupplung beseitigt werden. Bei anderen Einsatzgebieten kann mittels eines durch die Kammer 14 zirkulierten Kühlfluides ein Kühlen der Gleitlageranordnung 11 und/oder benachbarter Teile der Magnetkupplung bewirkt werden.

Die Erfindung wurde anhand einer bevorzugten Ausführungsform beschrieben. Es versteht sich jedoch, dass sie hierauf nicht beschränkt ist. So umfasst der Begriff "Strömungskammer" für das Temperierfluid auch eine im oder am Lagergehäuse in geeigneter Weise verlegte Rohrwindung, durch die das Temperierfluid hindurchgeführt werden kann. Als Temperierfluid kann jede geeignete Flüssigkeit verwendet werden, da die Temperierflüssigkeit wegen der hermetischen Abdichtung gegenüber der Umgebung nicht mit Bereichen der Magnetkupplung ausserhalb der Strömungskammer in Berührung kommt.

## Patentansprüche

1. Magnetkupplung zur Übertragung eines Drehmomentes zwischen einer Antriebseinrichtung und einer Welle (3), bestehend aus konzentrisch zueinander angeordneten an- und abtriebsseitigen Kupplungselementen (1,2) als Träger an- und abtriebsseitiger zusammenwirkender Magnetanordnungen (4,5), zwischen denen ein von einem Bereich eines drehfest gehaltenen Spalttopfes (6) durchsetzter Spalt (S) definiert ist, und einer Einrichtung zur Zirkulation eines Temperierfluides durch einen stationären Teil einer die Welle (3) haltenden Gleitlageranordnung (11), welche ein Paar axial beabstandete Gleitlager (11a,11b) umfasst, **gekennzeichnet durch** die folgenden Merkmale:
a) der stationäre Teil der Gleitlageranordnung (11) ist ein beide Gleitlager (11a,11b) einschliessendes Lagergehäuse (12) mit einer abgedichteten Fluidströmungskammer (14),
b) das Lagergehäuse (12) weist in die Fluidströmungskammer (14) mündende Zu- und Abführpassagen (16) für das Fluid auf, welche mit externen Zu- und Abführleitungen (20) ausserhalb der Magnetkupplung verbindbar sind,
c) das Lagergehäuse (12) steht aussenumfänglich in wärmeübertragender, radial beabstandeter, konzentrischer Beziehung zu einer inneren Umfängsfläche (17) des abtriebseitigen Kupplungselementes (2), und
d) das Lagergehäuse (11) ist im abtriebsseitigen Kupplungselement (2) im wesentlichen aufgenommen.

2. Magnetkupplung nach Anspruch 1, **dadurch gekennzeichnet, dass** die Fluidströmungskammer (14) ein im wesentlichen ringförmiger Hohlraum im Lagergehäuse (12) aufweist.

3. Magnetkupplung nach Anspruch 1, **gekennzeichnet durch** eine externe, mit den Fluidzu- und Abführleitungen (20) verbindbare Einrichtung zur Erwärmung und/oder Kühlung des Temperierfluides.

4. Magnetkupplung nach Anspruch 1, **dadurch gekennzeichnet, dass** das Lagergehäuse (12) eine kontinuierliche zylindrische äussere Abschlusswand (15) aufweist.

## Claims

1. A magnet coupling for transmitting torque between a driving means and a shaft (3), including driving-side and driven-side coupling elements (1,2) disposed concentrically to each other as carriers of driving-side and driven-side cooperating magnet means (4,5) between which a gap (S) is defined through which a portion of a non-rotatably held can extends, and means for circulating a temperature controlling fluid through a stationary part of a sleeve bearing arrangement (11) holding the shaft (11)and comprising a pair of axially spaced sleeve bearings (11a, 11b), **characterized by** the following features:
a) the stationary part of the sleeve bearing arrangement (11) is a bearing casing (12) enclosing both sleeve bearings (11a, 11b) and having a sealed fluid flow chamber (14) therein,
b) the bearing casing (12) comprises fluid inlet and outlet passages (16) porting the fluid flow chamber (14) and adapted for connection with external fluid inlet and outlet conduits (20) outside of the magnet coupling,
c) the bearing casing (12) by its outer circumference is disposed in a heat-transferring, radially spaced, concentric relationship to an inner circumferential surface (17) of the driven-side coupling element (2), and
d) the bearing casing (12) is accommodated essentially in the driven-side coupling element (2).

2. The magnet coupling as set forth in claim 1, **characterized in that** said fluid flow chamber (14) comprises a essentially annular-shaped cavity in said bearing casing (12).

3. The magnet coupling as set forth in claim 1, **characterized by** external means adapted for connection to said fluid inlet and outlet conduits (20) for heating and/or cooling said temperature controlling fluid.

4. The magnet coupling as set forth in claim 1, **characterized in that** said bearing casing (12) comprises a continuous cylindrical outer closure wall (15).

## Revendications

1. Accouplement magnétique pour transmettre un couple de rotation entre un dispositif d'entraînement et un arbre (3), constitué d'éléments d'accouplement (1, 2) du côté menant et du côté mené, agencés de manière concentrique l'un par rapport à l'autre, servant de supports pour des agencements magnétiques (4, 5) coopérants du côté menant et du côté mené, entre lesquels est défini un entrefer (S) traversé par une zone d'un pot d'entrefer (6) maintenu solidaire en rotation, et constitué d'un dispositif de circulation d'un fluide de températion à travers une partie stationnaire d'un agencement de paliers à glissement (11) retenant l'arbre (3), lequel comprend une paire de paliers à glissement (11a, 11b) axialement espacés, **caractérisé par** les caractéristiques suivantes :
a) la partie stationnaire de l'agencement de paliers à glissement (11) est un logement de palier (12) enfermant les deux paliers à glissement (1 la, 11b) avec une chambre d'écoulement de fluide (14) étanchée.
b) le logement de palier (12) présente des passages d'amenée et d'évacuation (16) pour le fluide qui débouchent dans la chambre d'écoulement de fluide (14) et qui peuvent être reliés à des conduites externes d'amenée et d'évacuation (20) en dehors de l'accouplement magnétique,
c) sur la périphérie extérieure, le logement de palier (12) est en relation concentrique radialement espacée de transmission de chaleur avec une surface périphérique (17) intérieure de l'élément d'accouplement (2) côté mené, et
d) le logement de palier (11) est sensiblement reçu dans l'élément d'accouplement (2) côté mené.

2. Accouplement magnétique selon la revendication 1, **caractérisé en ce que** la chambre d'écoulement de fluide (14) présente une cavité sensiblement annulaire dans le logement de palier (12).

3. Accouplement magnétique selon la revendication 1, **caractérisé par** un dispositif de chauffage et/ou de refroidissement du fluide de températion externe, qui peut être relié avec les conduites d'amenée et d'évacuation (20) du fluide.

4. Accouplement magnétique selon la revendication 1, **caractérisé en ce que** le logement de palier (12) présente une paroi de fermeture (15) extérieure continue cylindrique.
